# EUROPÄISCHE PATENTSCHRIFT

(11) **EP 3 380 869 B1**
(45) Veröffentlichungstag und Bekanntmachung des Hinweises auf die Patenterteilung: **17.06.2020**
(21) Anmeldenummer: 16785528.7
(22) Anmeldetag: 26.10.2016
(51) Int. Cl.: G01S 17/42, G01S 17/93, G01S 7/481

(54) **LASERSCANNER UND KRAFTFAHRZEUG MIT EINEM LASERSCANNER**
LASER SCANNER AND MOTOR VEHICLE HAVING A LASER SCANNER
DISPOSITIF SCANNEUR À LASER ET VÉHICULE AUTOMOBILE ÉQUIPÉ D'UN DISPOSITIF SCANNEUR À LASER

(30) Priorität: 26.11.2015 DE 102015120538
(43) Veröffentlichungstag der Anmeldung: 03.10.2018
(73) Patentinhaber: Valeo Schalter und Sensoren GmbH, 74321 Bietigheim-Bissingen (DE)
(72) Erfinder: TCHOUAFFE, Serge, 74321 Bietigheim-Bissingen (DE)
(74) Vertreter: Withopf, Kristina
(86) Internationale Anmeldenummer: PCT/EP2016/075792
(87) Internationale Veröffentlichungsnummer: WO 2017/089063

(56) Entgegenhaltungen:
- EP-A1- 1 515 161
- WO-A1-2005/059621
- DE-A1- 10 323 317
- DE-A1-102005 028 570
- DE-A1-102005 049 471
- DE-A1-102014 207 965
- US-B1- 7 457 493

## Beschreibung

Die Erfindung betrifft einen Laserscanner für ein Kraftfahrzeug gemäß dem Oberbegriff des Anspruchs 1. Die Erfindung betrifft außerdem gemäß Anspruch 7 ein Kraftfahrzeug mit einem solchen Laserscanner.

Laserscanner dienen bei Kraftfahrzeugen der Erfassung und Ermittlung von Informationen über das Umfeld des Fahrzeugs für Fahrerassistenzsysteme, das heißt elektronische Zusatzeinrichtungen zur Unterstützung des Fahrers in bestimmten Fahrsituationen. Laser-basierte Systeme, auch unter der Bezeichnung LIDAR ("Light detection and ranging") bekannt, dienen der optischen Abstands- und Geschwindigkeitsmessung und ermöglichen die Erkennung von Objekten im Sichtfeld des Laserscanners.

Ein Laserscanner arbeitet nach dem Lichtlaufzeitprinzip, wobei ein optischer Sender die Umgebung des Laserscanners beleuchtet. Der Laserscanner umfasst einen optoelektronischen Empfänger für reflektierte Strahlen, das heißt solche Lichtstrahlen, welche von einem Zielobjekt in Sichtfeld des Laserscanners reflektiert sind. Der optoelektronische Empfänger stellt in Abhängigkeit der empfangenen (reflektierten) Lichtstrahlen ein entsprechendes elektrisches Empfangssignal für eine Auswertung bereit. Die Laufzeit zwischen dem Aussenden und Empfangen eines Echos ist proportional zur Distanz zum Zielobjekt, wodurch laufend Informationen über das Zielobjekt im Sichtfeld des Laserscanners ermittelt werden können. Der Laserscanner wird beispielsweise im vorderen Bereich des Kraftfahrzeugs platziert, wie etwa hinter der Windschutzscheibe oder am Kühlergrill, um unter anderem die Zeit bis zum Aufprall (TTC = "Time to collision") zu ermitteln. Laserscanner können aber auch im seitlichen Bereich des Kraftfahrzeugs platziert werden, um beispielsweise den Totwinkel des Kraftfahrzeugs zu überwachen.

Bekannte Laserscanner umfassen eine Umlenkspiegelanordnung für das schrittweise Scannen eines Sichtfelds des Laserscanners in Teilsichtfeldern, welche mit der Steuereinheit signalübertragend verbunden ist. DE 10 2010 047 984 A1 offenbart einen Laserscanner mit einem Laser als optischem Sender, einem optoelektronischen Empfänger sowie einer Umlenkspiegeleinheit, welche im Strahlweg zwischen dem optischen Sender und dem Empfänger angeordnet ist. Die Umlenkspiegeleinheit des bekannten Laserscanners lenkt die ausgesendeten Strahlen mit einem Sendespiegel auf die zu vermessende Szene. Ein dem Empfänger zugeordneter Empfangsspiegel lenkt die von Zielobjekten reflektierten Strahlen auf den Empfänger. Der Sendespiegel und der Empfangsspiegel sind um eine gemeinsame Rotationsachse drehbar, welcher von einer Antriebseinheit angetrieben wird. Mit der Umlenkspiegelanordnung ist eine Steuereinheit signalübertragend verbunden, um die Messergebnisse des Empfängers schrittweise den jeweiligen Drehwinkelstellungen der Umlenkspiegelanordnung zuzuordnen. Auf diese Weise wird schrittweise im Umlauf der rotierenden Umlenkspiegelanordnung das Sichtfeld des Laserscanners gescannt.

Der Energiebedarf und die Wärmeproduktion des bekannten Laserscanners führen im Betrieb des Laserscanners zu hohen Betriebskosten.

Aus DE 10 2005 049 471 B4 ist ein Entfernungssensor mit Einzelflächenabtastung bekannt, bei dem die Entfernung nach dem Laufzeitprinzip von Lichtimpulsen gemessen wird. Der bekannte Entfernungssensor umfasst eine Sendeeinheit, welche mit einem ersten Laser Lichtstrahlen einer ersten Wellenlänge imitiert und mit einem zweiten Laser Lichtstrahlen einer zweiten Wellenlänge imitiert. Die zu vermessende Fläche wird von beiden Lasern der Sendeeinheit über einen steuerbaren Spiegel jeweils in Teilflächen beleuchtet. Ein erstes Empfangssystem weist einen Detektor für Strahlung der ersten Wellenlänge und ein zweites Empfangssystem einen Detektor für Strahlung der zweiten Wellenlänge auf. Der Entfernungssensor weist eine Spiegelmatrix auf, wobei durch Ansteuerung mindestens einer der Elemente dieser Spiegelmatrix auf Durchlass der Detektor des ersten Empfangssytems nur von der beleuchteten Teilfläche beaufschlagt wird.

DE 103 23 317 A1 zeigt eine Umlenkspiegelanordnung für eine optische Messvorrichtung mit einer Spiegeleinheit, welche auf einer drehbaren Achse angeordnet ist und einen Umlenkspiegel umfasst, und einer Antriebseinheit, welche die drehbare Achse antreibt, sowie eine optische Messvorrichtung mit einer solchen Umlenkspiegelanordnung.Um eine Reduzierung des erforderlichen Bauraums zu ermöglichen, umfasst die Spiegeleinheit zwei Umlenkspiegel, welche in einer gemeinsamen horizontalen Ebene radial beabstandet zur drehbaren Achse angeordnet sind, wobei die Antriebseinheit teilweise im Raum zwischen den beiden Umlenkspiegeln angeordnet ist.

Der vorliegenden Erfindung liegt die Aufgabe zugrunde, die Betriebskosten eines Laserscanners für Kraftfahrzeuge zu senken.

Die Aufgabe wird erfindungsgemäß durch einen Laserscanner mit den Merkmalen des Anspruchs 1 gelöst. Außerdem wird die Aufgabe gemäß Anspruch 7 durch ein Kraftfahrzeug mit einem solchen Laserscanner gelöst.

Erfindungsgemäß umfasst die Umlenkspiegelanordnung mehrere Umlenkspiegel, welche derart relativ zueinander angeordnet sind, dass jeder Umlenkspiegel ein Teilsichtfeld des Sichtfelds des Laserscanners erfasst. Dabei ist jeder Umlenkspiegel von der Steuereinheit zwischen einem aktiven Spiegelstatus, in welchem der jeweilige Umlenkspiegel ankommende Lichtstrahlen den Strahlweg reflektiert, und einem passiven Spiegelstatus, in welchem ankommende Lichtstrahlen im Strahlweg den Umlenkspiegel passieren, umschaltbar. Zum Scannen des Sichtfelds aktiviert die Steuereinheit die Umlenkspiegel alternativ, so dass der Umlenkspiegel, welcher sich in einem aktiven Spiegelstatus befindet, den ankommenden Lichtstrahl reflektiert. Anders ausgedrückt wird der Strahlweg zwischen optischem Sender und Empfänger stets über einen im aktiven Spiegelstatus geschalteten Umlenkspiegel nach Maßgabe der Steuereinheit geleitet.

Der Strahlweg zum optoelektronischen Empfänger führt dabei über jeweils einen der schaltbaren Umlenkspiegel, so dass durch sukzessive Aktivierung der Umlenkspiegel schrittweise ein Sichtfeld entsprechend der Summe der über einzelne Umlenkspiegel erfassbaren Teilsichtfelder abtastbar ist. Auf diese Weise erfasst der erfindungsgemäße Laserscanner ohne Energiebedarf für eine Antriebseinrichtung für die Umlenkspiegelanordnung, die bei bisherigen Laserscannern erforderlich ist, das gesamte Sichtfeld. Neben einem deutlich reduzierten Energiebedarf wird auch die Wärmeproduktion im Vergleich zu herkömmlichen Laserscannern mit Antriebsmotoren für die Umlenkspiegelanordnung reduziert. Ferner erfordert ein Laserscanner ohne elektrischen Antriebsmotor erheblich weniger Bauraum.

In einer vorteilhaften Ausführungsform der Erfindung sind die Umlenkspiegel über einander in einem Spiegelstapel mit wenigstens teilweiser Überdeckung mit Abständen in Längsrichtung des Spiegelstapels angeordnet. Sämtliche Umlenkspiegel liegen dabei nahe einer Längsachse des durch die Umlenkspiegel gebildeten Spiegelstapels, so dass jeder der Spiegel ankommende Lichtstrahlen bedarfsweise reflektieren oder passieren lassen kann. Diejenigen Umlenkspiegel, welche im Spiegelstapel näher am Eingang der ankommenden Lichtstrahlen in dem Spiegelstapel liegen, als der Umlenkspiegel im aktiven Spiegelstatus, sind dabei in den passiven Spiegelstatus geschaltet.

Die Umlenkspiegel sind in dem Spiegelstapel jeweils mit einer Neigung gegenüber einer Längsachse des Spiegelstapels angeordnet, so dass eine Umlenkung in den jeweiligen Teilsichtfeldsektor gewährleistet ist.

Vorteilhaft sind die Umlenkspiegel elektrisch zwischen dem aktiven Spiegelstatus und dem passiven Spiegelstatus umschaltbar. Anders ausgedrückt sind die Umlenkspiegel als elektrisch schaltbarer Transflektor ausgebildet und wirken im aktiven Spiegelstatus als Reflektor. Im passiven Spiegelstatus ist der jeweilige Umlenkspiegel für die im Strahlweg ankommenden Lichtstrahlen durchlässig. Die Umlenkspiegel sind dabei in dem Spiegelstapel derart übereinander angeordnet, dass ein von allen Umlenkspiegeln überdeckter Bereich gebildet ist, in welchem der ankommende Lichtstahl bis zu dem im aktiven Spiegelstatus geschalteten Umlenkspiegel gelangt und bis dahin durch die Umlenkspiegel im passiven Status durchgelassen ist. Bei der Ausbildungsform der Umlenkspiegel als Transflektor ist der Spiegelstatus durch die Transparenz des Umlenkspiegels charakterisiert, nämlich entweder im aktiven Spiegelstatus reflektierend oder im passiven Spiegelstatus transparent beziehungsweise für die ankommenden Lichtstrahlen durchlässig.

In einer weiteren vorteilhaften Ausführungsform der Erfindung sind die schaltbaren Umlenkspiegel als Kippelemente ausgebildet, wobei der Spiegelstatus der kippfähigen Umlenkspiegel durch eine aktive Stellung, in welcher der Umlenkspiegel in den Strahlweg der ankommenden Lichtstrahlen gekippt wird und eine passive Spiegelstellung charakterisiert ist, in welcher der Umlenkspiegel außerhalb des Strahlweg liegt.

Sind die Umlenkspiegel in Drehwinkeln bezüglich der Längsrichtung des Spiegelstapels beabstandet angeordnet, so erfasst jeder Umlenkspiegel entsprechend seiner Drehwinkellage einen anderen Sektor welcher sein jeweiliges Teilsichtfeld definiert. Vorteilhaft grenzen dabei die von den Umlenkspiegeln jeweils erfassten Teilsichtfelder aneinander oder überschneiden sich teilweise, wobei im Rahmen der Auswertung des Empfangssignals des optoelektronischen Empfängers eine Zuordnung zum jeweiligen Teilsichtfeld erfolgt.

Eine kompakte Bauweise des Laserscanners ist gegeben, wenn die Umlenkspiegel spiralförmig bezogen auf die Längsrichtung des durch die Umlenkspiegel gebildeten Spiegelstapels gruppiert sind.

Ausführungsbeispiele der Erfindung sind nachstehend anhand der Zeichnung näher erläutert. Es zeigen:
- Fig. 1: eine Draufsicht eines Kraftfahrzeugs mit einem Laserscanner,
- Fig. 2: eine perspektivische Ansicht eines Ausführungsbeispiels eines Laserscanners gemäß dem Stand der Technik,
- Fig. 3: eine schematische Darstellung eines Ausführungsbeispiels einer Umlenkspiegelanordnung für einen Laserscanner,
- Fig. 4: eine Draufsicht auf die Umlenkspiegelanordnung gemäß Fig. 3.

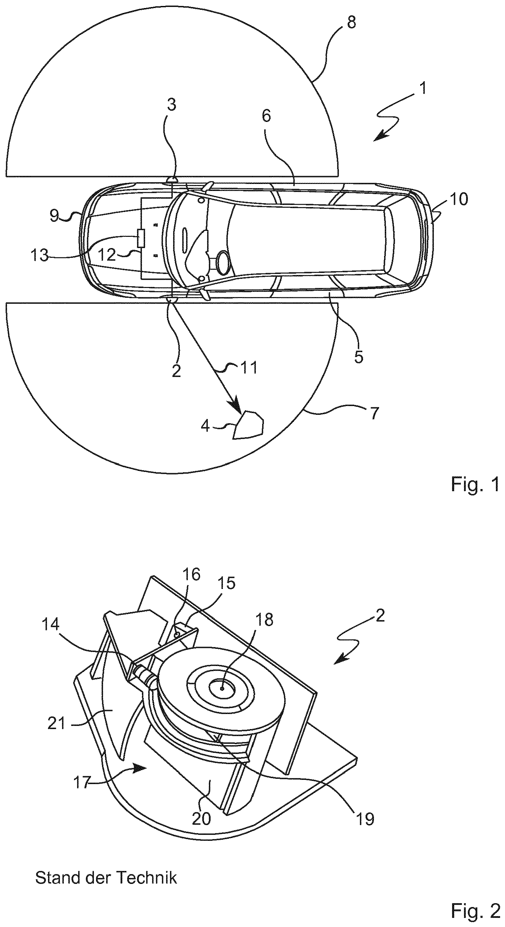

Fig. 1 zeigt eine Draufsicht eines Kraftfahrzeugs 1 mit im Ausführungsbeispiel zwei Laserscannern 2, 3 zur Erkennung von Zielobjekten 4 im Umfeld des Kraftfahrzeugs 1. Die Laserscanner 2, 3 sind im gezeigten Ausführungsbeispiel an den Seiten 5, 6 des Kraftfahrzeugs 1 angeordnet. Die Laserscanner 2, 3 ragen dabei aus der Karosserie des Kraftfahrzeugs 1 hervor und erfassen jeweils ein seitliches Sichtfeld 7, 8.

Alternativ oder zusätzlich zu der Anordnung von Laserscannern 2, 3 an den Seiten 5, 6 des Kraftfahrzeugs 1 können Laserscanner an der Front 9 oder am Heck 10 des Kraftfahrzeugs 1 angeordnet sein.

Die Laserscanner 2, 3 umfassen jeweils mindestens einen optischen Sender 14 (siehe Fig. 2) zur Beleuchtung der Umgebung des Laserscanners 2, 3, und einen optoelektronischen Empfänger 15 (Fig. 2). Der optoelektronische Empfänger ist zum Empfangen von an einem Zielobjekt 4 in der Umgebung des Laserscanners 2, 3 reflektierten Lichtstrahlen 11 ausgebildet. In Abhängigkeit der empfangenen Lichtstrahlen stellt der Empfänger ein elektrisches Empfangssignal 12 bereit. Das elektrische Empfangssignal 12 oder ein Detektionsergebnis einer Auswertung des Empfangssignals 12 wird einem Fahrerassistenzsystem 13 des Kraftfahrzeug 1 bereitgestellt.

Fig. 2 zeigt eine perspektivische Ansicht eines Laserscanners 2 gemäß dem Stand der Technik, wie er beispielsweise in DE 10 2010 047 984 A1 offenbart ist. Ein Gehäuse des Laserscanners 2 ist in der Darstellung nicht gezeigt.

Der Laserscanner 2 umfasst einen als Laser ausgeführten optischen Sender 14 zum Aussenden von Lichtstrahlen 11 in die Umgebung des Laserscanners 2. Ein optoelektronischer Empfänger 15 ist mit Fotodioden 16, beispielsweise Avalanche-Dioden, bestückt, welche in Abhängigkeit empfangener Lichtstrahlen ein elektrisches Empfangssignal bereitstellen. Der optische Sender 14 und der optoelektronische Empfänger 15 sind derart aufeinander abgestimmt und abgeglichen, dass gesendete Lichtstrahlen und empfangene Lichtstrahlen einander zugeordnet werden können.

Der Laserscanner 2 gemäß dem Stand der Technik umfasst eine Umlenkspiegelanordnung 17, welche mittels einer nicht dargestellten Antriebseinheit eine Rotationsachse 18 antreibbar ist. Die Antriebseinheit ist oft als Schrittmotor ausgeführt, so dass den Messergebnissen des Laserscanners 2 eine Drehwinkelstellung der Umlenkspiegelanordnung 17 zugeordnet werden kann und dadurch das Sichtfeld schrittweise abgetastet, das heißt gescannt, werden kann.

Die Umlenkspiegelanordnung 17 gemäß dem Stand der Technik umfasst mehrere Umlenkspiegel 19, 20, welche einerseits dem optischen Sender 14 und andererseits dem Empfänger 15 zugeordnet sind. Ein Umlenkspiegel 19 ist dabei als Sendespiegel vorgesehen und auf Höhe des optischen Senders 14 angeordnet. Über diesen Umlenkspiegel werden die Lichtstrahlen des optischen Senders 14 entsprechend der Winkelstellung des Umlenkspiegels 19 umgelenkt und auf die zu vermessende Szene gelenkt. Der Umlenkspiegel 20 ist als Empfangsspiegel auf Höhe des Empfängers 15 angeordnet und lenkt die ankommenden Lichtstrahlen in Richtung des Empfängers 15 um. Zwischen dem optoelektronischen Empfänger 15 und seinem Umlenkspiegel 20 ist eine Empfangsoptik 21 angeordnet. Die Umlenkspiegelanordnung 17 ist mit einer nicht dargestellten Steuereinheit verbunden, welche im Betrieb des Laserscanners die Empfangssignale des optoelektronischen Empfängers 15 mit der Drehwinkelstellung der rotierenden Umlenkspiegelanordnung 17 synchronisiert, so dass eine Information über die Orientierung, beziehungsweise die Richtung eines detektierten Objekts zum Laserscanner 2, bereitgestellt ist. Die Entfernung eines Zielobjekts 4 (Fig. 1) ergibt sich nach dem Prinzip der Lichtlaufzeitmessung.

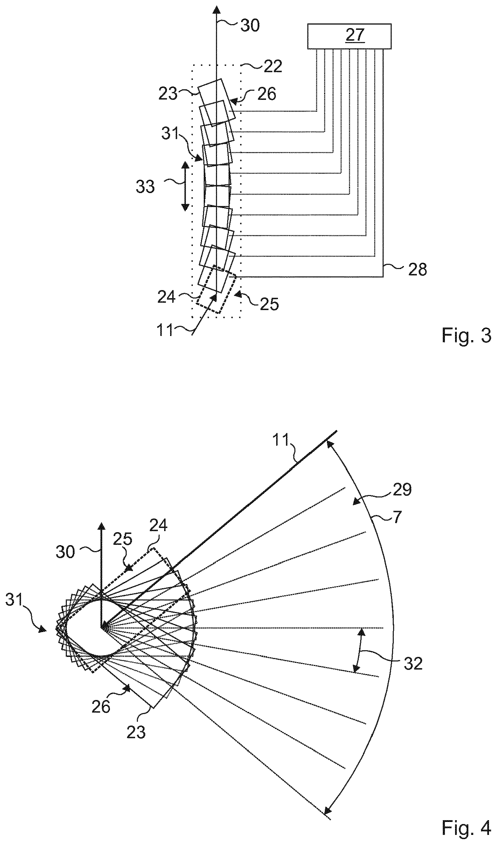

Fig. 3 und Fig. 4 zeigen eine Umlenkspiegelanordnung 22 eines erfindungsgemäßen Laserscanners. Der Laserscanner umfasst nicht dargestellte optische Sender und optoelektronische Empfänger, welche in an sich bekannter Weise und anhand von Fig. 2 beschrieben, Licht aussenden (optischer Sender) und reflektierte Lichtstrahlen empfangen (optoelektronischer Empfänger). Anstelle der rotierend angetriebenen Umlenkspiegelanordnung 17 gemäß dem Stand der Technik in Fig. 2 ist bei dem erfindungsgemäßen Laserscanner eine nachstehend näher beschriebene Umlenkspiegelanordnung 22 vorgesehen, deren mehrere Umlenkspiegel 23, 24 sind elektrisch zwischen einem aktiven Spiegelstatus 25 und einem passiven Spiegelstatus 26 von einer Steuereinheit 27 umschaltbar sind. Die Umlenkspiegelanordnung 22 ist im Strahlweg 30 zwischen dem optischen Sender 14 und dem optoelektronischen Empfänger 15 angeordnet, welche beide in Fig. 3 nicht dargestellt sind.

Der aktive Spiegelstatus 25 ist in der Darstellung gemäß Fig. 3 durch eine strichlierte Linie an dem Umlenkspiegel 24 symbolisiert. Die weiteren Umlenkspiegel 23 befinden sich jeweils im passiven Spiegelstatus 26, welcher durch eine Volllinie symbolisiert ist. Im aktiven Spiegelstatus 25 reflektiert der jeweilige Umlenkspiegel 24 ankommende Lichtstrahlen im Strahlweg 30. Im passiven Spiegelstatus 26 passieren ankommende Lichtstrahlen den jeweiligen Umlenkspiegel 23. Sämtliche Umlenkspiegel 23, 24 sind von der Steuereinheit 27 zwischen dem aktiven Spiegelstatus 25 und dem passiven Spiegelstatus 26 umschaltbar. Anders ausgedrückt sind sämtliche Umlenkspiegel 23, 24 als Transreflektor ausgebildet, worunter zu verstehen ist, dass die Umlenkspiegel in im aktiven Spiegelstatus 25 auftreffende Lichtstrahlen 11 reflektieren und im passiven Schaltstatus 26 transparent sind und daher im Strahlweg 30 durchlässig. In Abhängigkeit eines Schaltsignals 28 der Steuereinheit 27 sind die Umlenkspiegel 23, 24 alternativ in den aktiven Spiegelstatus 25 oder den passiven Spiegelstatus 26 schaltbar.

Die Umlenkspiegelanordnung 22 bestimmt somit über die Schaltstellung ihrer Umlenkspiegel 23, 24 den Strahlweg 30, welcher stets über einen Umlenkspiegel 24 im aktiven Spiegelstatus 25 führt. Im gezeigten Ausführungsbeispiel lenkt die Umlenkspiegelanordnung 22 reflektierte Lichtstrahlen zum optoelektronischen Empfänger um. In einem weiteren, nicht gezeigten Ausführungsbeispiel ist die Umlenkspiegelanordnung 22 dem optischen Sender zugeordnet und lenkt die Lichtstrahlen des optischen Senders auf die zu vermessende Umgebung um. Das elektrische Schaltsignal 28 verändert dabei die optischen Eigenschaften des Transflektors.

Die Umlenkspiegel 23, 24 sind übereinander in einem Spiegelstapel 31 aufgereiht angeordnet. Die Umlenkspiegel 23, 24 überdecken sich dabei in Stapelrichtung 33 teilweise, wobei der überdeckte Bereich im Bereich des Strahlwegs 30 liegt und in entsprechenden Schaltstellungen der Umlenkspiegelanordnung 22 bei den Umlenkspiegeln 23 im passiven Spiegelstatus 26 transparent ist. Die Umlenkspiegel 23, 24 sind dabei in Drehwinkeln 32 bezüglich der Stapelrichtung 33 der Umlenkspiegel 23, 24 im Spiegelstapel 31 beabstandet angeordnet. Die in Drehwinkelrichtung versetzte Anordnung der Umlenkspiegel 23, 24 führt zu einer derartigen Relativlage der Umlenkspiegel 23, 24, dass jeder Umlenkspiegel 23, 24 ein Teilsichtfeld 33 des Sichtfelds 7 des Laserscanners erfasst. Die Umlenkspiegel 23, 24 liegen dabei in jeweils gleichen Drehwinkeln 32 von einander beabstandet.

Die Umlenkspiegel 23, 24 liegen mit einer Neigung gegenüber der Stapelrichtung 33 des Spiegelstapels 31, so dass an einem Umlenkspiegel im aktiven Spiegelstatus 25 der auftreffende Lichtstrahl 11 in das dem jeweiligen Umlenkspiegel 23, 24 zugeordnete Teilsichtfeld 29 beziehungsweise aus dem Teilsichtfeld ankommende Lichtstrahlen in Richtung auf den optoelektronischen Empfänger umgelenkt werden.

In Betrieb des Laserscanners schaltet die Steuereinheit 27 nacheinander die Umlenkspiegel 23, 24 in den aktiven Spiegelstatus 25, so dass schrittweise Lichtstrahlen aus den einzelnen Teilsichtfeldern 29 der Umlenkspiegel empfangen werden und das gesamte Sichtfeld 7 gescannt wird. Diejenigen Umlenkspiegel 23, welche im Spiegelstapel 31 näher am Eingang der ankommenden Lichtstrahlen 11 liegen als der aktuell im aktiven Spiegelstatus 25 geschaltete Umlenkspiegel 24, werden von der Steuereinheit 27 in den passiven Spiegelstatus 26 geschaltet, so dass sie im vorgesehenen Strahlweg 30 für die auftreffenden Lichtstrahlen transparent sind.

Die Umlenkspiegel 23, 24 sind derart konfiguriert und in derartigen Drehwinkeln 32 von einander beabstandet angeordnet, dass die von den Umlenkspiegeln 23, 24 jeweils erfassbaren Teilsichtfelder 33 (entsprechend den Drehwinkeln 32) aneinander grenzen oder sich teilweise überschneiden, so dass sich ein lückenlos erfassbares Sichtfeld 7 bereitgestellt ist. Durch die sukzessive Aktivierung der Umlenkspiegel 23, 24 durch die Steuereinheit 27 kann das Sichtfeld 7 ohne eine Antriebseinheit für die Umlenkspiegel und daher mit sehr niedrigem Energiebedarf und Wärmeentwicklung gescannt werden.

Die Umlenkspiegel 23, 24 sind spiralförmig bezogen auf die Stapelrichtung des Spiegelstapels 31 gruppiert, so dass sie zum einen mit der gewünschten Neigung gegenüber der Längsrichtung und zudem mit dem gewünschten Drehwinkel 32 (Fig. 4) angeordnet sind.

## Patentansprüche

1. Laserscanner für ein Kraftfahrzeug (1) mit einem optischen Sender (14) zur Beleuchtung einer Umgebung des Laserscanners (2, 3), mit einem optoelektronischen Empfänger (15) zum Empfangen von an einem Zielobjekt (4) in der Umgebung des Laserscanners (2, 3) reflektierten Lichtstrahlen (11) und Erzeugung eines den empfangenen Lichtstrahlen (11) entsprechenden Empfangssignals (12), mit einer Steuereinheit (27) und einer im Bereich eines Strahlwegs (30) der Lichtstrahlen (11) zwischen optischem Sender (14) und optoelektronischem Empfänger (15) angeordneten Umlenkspiegelanordnung (22), welche für das schrittweise Scannen eines Sichtfelds (7) des Laserscanners (2, 3) in Teilsichtfeldern (29) mit der Steuereinheit (27) signalübertragend verbunden ist,
**dadurch gekennzeichnet, dass**
die Umlenkspiegelanordnung (22) mehrere Umlenkspiegel (23) umfasst, welche als elektrisch schaltbare Transflektoren ausgebildet sind und derart relativ zueinander angeordnet sind, dass jeder Umlenkspiegel (23, 24) ein Teilsichtfeld (29) des Laserscanners (2, 3) erfasst, wobei jeder Umlenkspiegel (23, 24) von der Steuereinheit (27) zwischen einem aktiven Spiegelstatus (25), in welchem der jeweilige Umlenkspiegel (24) ankommende Lichtstrahlen (11) im Strahlweg (30) reflektiert, und einem passiven Spiegelstatus (26), in welchem der Umlenkspiegel (23) transparent für die ankommende Lichtstrahlen (11) im Strahlweg (30) ist, elektrisch umschaltbar ausgebildet ist.

2. Laserscanner nach Anspruch 1,
**dadurch gekennzeichnet, dass**
die Umlenkspiegel (23, 24) übereinander in einem Spiegelstapel (31) mit Abständen in Stapelrichtung (33) der Umlenkspiegel (23, 24) im Spiegelstapel (31) angeordnet sind.

3. Laserscanner nach einem der vorhergehenden Ansprüche,
**dadurch gekennzeichnet, dass**
die Umlenkspiegel (23, 24) in Drehwinkeln (32) bezüglich der Stapelrichtung (33) des Spiegelstapels (31) beabstandet angeordnet sind.

4. Laserscanner nach einem der vorhergehenden Ansprüche,
**dadurch gekennzeichnet, dass**
die Umlenkspiegel (23, 24) derartig konfiguriert sind und in derartigen Drehwinkeln (32) bezüglich der Stapelrichtung (33) des Spiegelstapels (31) von einander beabstandet angeordnet sind, dass sie von den Umlenkspiegeln (23, 24) jeweils erfassbaren Teilsichtfelder (33) aneinander grenzen oder sich teilweise überschneiden.

5. Laserscanner nach einem der vorhergehenden Ansprüche,
**dadurch gekennzeichnet, dass**
die Umlenkspiegel (23, 24) spiralförmig bezogen auf die Stapelrichtung (33) des Spiegelstapels (31) gruppiert sind.

6. Kraftfahrzeug mit einem Laserscanner (2, 3) nach einem der vorhergehenden Ansprüche.

## Claims

1. Laser scanner for a motor vehicle (1), having an optical emitter (14) for illuminating surroundings of the laser scanner (2, 3), having an optoelectronic receiver (15) for receiving light beams (11) reflected at a target object (4) in the surroundings of the laser scanner (2, 3) and for generating a reception signal (12) corresponding to the received light beams (11), having a control unit (27) and a deflection mirror arrangement (22), which is arranged in the region of a beam path (30) of the light beams (11) between the optical emitter (14) and the optoelectronic receiver (15), and which is connected in a signal-transmitting manner to the control unit (27) for the step-by-step scanning of a field of view (7) of the laser scanner (2, 3) in partial fields of view (29),
**characterized in that**
the deflection mirror arrangement (22) comprises a plurality of deflection mirrors (23), which are formed as electrically switchable transflectors and are arranged relative to one another such that each deflection mirror (23, 24) captures a partial field of view (29) of the laser scanner (2, 3), wherein each deflection mirror (23, 24) is formed as electrically switchable by the control unit (27) between an active mirror status (25), in which the respective deflection mirror (24) reflects incoming light beams (11) in the beam path (30), and a passive mirror status (26), in which the deflection mirror (23) is transparent for the incoming light beams (11) in the beam path (30).

2. Laser scanner according to Claim 1,
**characterized in that**
the deflection mirrors (23, 24) are arranged one over another in a mirror stack (31) at intervals in the stacking direction (33) of the deflection mirrors (23, 24) in the mirror stack (31).

3. Laser scanner according to any of the preceding claims,
**characterized in that**
the deflection mirrors (23, 24) are arranged spaced apart at rotational angles (32) with respect to the stacking direction (33) of the mirror stack (31).

4. Laser scanner according to any of the preceding claims,
**characterized in that**
the deflection mirrors (23, 24) are configured and arranged spaced apart from one another at rotational angles (32) with respect to the stacking direction (33) of the mirror stack (31) such that the partial fields of view (33) which are respectively capturable by the deflection mirrors (23, 24) adjoin one another or partially overlap.

5. Laser scanner according to any of the preceding claims,
**characterized in that**
the deflection mirrors (23, 24) are grouped in a spiral shape with respect to the stacking direction (33) of the mirror stack (31).

6. Motor vehicle having a laser scanner (2, 3) according to any of the preceding claims.

## Revendications

1. Système de balayage à laser pour un véhicule automobile (1), comprenant un émetteur optique (14) destiné à éclairer un environnement du système de balayage à laser (2, 3), comprenant un récepteur optoélectronique (15) destiné à recevoir des rayons lumineux (11) réfléchis au niveau d'un objet cible (4) dans l'environnement du système de balayage à laser (2, 3) et générer un signal de réception (12) correspondant à l'un des rayons lumineux (11) reçus, comprenant une unité de commande (27) et un arrangement de miroirs de déviation (22), lequel est disposé dans la zone d'un trajet de rayon (30) des rayons lumineux (11) entre l'émetteur optique (14) et le récepteur optoélectronique (15), et relié en transmission de signal à l'unité de commande (27) pour le balayage par paliers d'un champ de vision (7) du système de balayage à laser (2, 3) en champs de vision partiels (29),
**caractérisé en ce que**
l'arrangement de miroirs de déviation (22) comporte plusieurs miroirs de déviation (23), lesquels sont réalisés sous la forme de transflecteurs commutables électriquement et sont disposés les uns par rapport aux autres de telle sorte que chaque miroir de déviation (23, 24) capte un champ de vision partiel (29) du système de balayage à laser (2, 3), chaque miroir de déviation (23, 24) étant configuré permutable électriquement par l'unité de commande (27) entre un état de miroir actif (25), dans lequel le miroir de déviation (24) respectif réfléchit les rayons lumineux (11) arrivants dans le trajet de rayon (30), et un état de miroir passif (26), dans lequel le miroir de déviation (23) est transparent pour les rayons lumineux (11) arrivants dans le trajet de rayon (30) .

2. Système de balayage à laser selon la revendication 1,
**caractérisé en ce que** les miroirs de déviation (23, 24) sont disposés les uns au-dessus des autres en une pile de miroirs (31) avec des écarts dans le sens de l'empilement (33) des miroirs de déviation (23, 24) dans la pile de miroirs (31).

3. Système de balayage à laser selon l'une des revendications précédentes, **caractérisé en ce que** les miroirs de déviation (23, 24) sont disposés espacés dans des angles de rotation (32) en référence au sens de l'empilement (33) de la pile de miroirs (31).

4. Système de balayage à laser selon l'une des revendications précédentes, **caractérisé en ce que** les miroirs de déviation (23, 24) sont configurés de telle sorte et sont disposés espacés dans des angles de rotation (32) en référence au sens de l'empilement (33) de la pile de miroirs (31) de telle sorte que les champs de vision partiels (33) pouvant respectivement être captés par les miroirs de déviation (23, 24) se croisent mutuellement ou convergent partiellement.

5. Système de balayage à laser selon l'une des revendications précédentes, **caractérisé en ce que** les miroirs de déviation (23, 24) sont groupés en forme de spirale par rapport au sens de l'empilement (33) de la pile de miroirs (31).

6. Véhicule automobile équipé d'un système de balayage à laser (2, 3) selon l'une des revendications précédentes.
